# EUROPEAN PATENT SPECIFICATION

(11) **EP 4 455 529 B1**
(45) Date of publication and mention of the grant of the patent: **24.06.2026**
(21) Application number: 23170817.3
(22) Date of filing: 28.04.2023
(51) Int. Cl.: F16L 21/00

(54) **CLAMPING DEVICE FOR CONNECTING HOSE BARBS**
SPANNVORRICHTUNG ZUM VERBINDEN VON SCHLAUCHHAKEN
DISPOSITIF DE SERRAGE POUR RELIER DES ARDILLONS DE TUYAU

(43) Date of publication of application: 30.10.2024
(73) Proprietor: Sartorius Stedim Biotech GmbH, 37079 Göttingen (DE)
(72) Inventor: PREDIGER, Andreas, 37079 Göttingen (DE); SCHENKE, Tim, 37079 Göttingen (DE)
(74) Representative: Novagraaf International SA

(56) References cited:
- DE-C- 689 184
- GB-A- 1 295 176
- US-A- 2 726 682

## Description

The invention relates to a clamping device for fluidically and mechanically connecting two hose barbs.

Single-use systems in the field of "separations" and "fluid management" are mostly used to transport liquids and gases. Components such as filters, sensors, and actuators are connected to each other via hoses, which are often made of silicone. In order to create a tight connection, one end of the hose is pulled over the hose barb of the one component and the other end of the hose is pulled over the hose barb of the other component. The hose ends are fastened with cable ties or clamps, for example.

In particular for systems used in chromatography, filtration, and virus inactivation, it is desired to keep the volume of the hoses and components as small as possible in order to avoid a large amount of valuable medium remaining in the system at the end of the process. This is especially important when only a limited amount of medium is available and/or when the medium is of high monetary value.

One option is to rinse the system after the end of a process. However, this leads to a dilution of the processed medium such that it cannot be used for further processes.

In order to design components with the smallest possible volume, it is advantageous to bundle components in individual assemblies. This also minimizes the tube length between the components. However, a minimum tube length is usually required in order to assemble the components properly.

GB 1 295 176 A describes a tubular connection in which the ends of two metal pipes are inserted into a metallic sleeve. The sleeve is narrower at its axial extremities, and electrically insulating rings are placed between the sleeve and the outer surfaces of the pipes. A casting resin (e.g. Araldite) is then poured into the space between the pipe ends, the sleeve, and the rings, where it hardens to form a rigid, electrically insulating bond.

US 2 726 682 A relates to a flexible duct attached over rigid conduits or nipples by means of circumferential clamps. The primary focus is on preventing leakage and slippage by shaping the end portions of the duct with extra reinforcing or tapered sections, so that the duct resists dislodgement under internal pressure or elevated temperatures.

DE 689 184 C shows a connecting arrangement to be used in fluid conduits, especially in water supply systems. A rubber pipe is vulcanized onto opposite ends of two metal connection pieces. A surrounding metal sleeve is applied to limit expansion and dampen vibration. The metal sleeve is fixed in place around the vulcanized connections.

It is an object of the invention to simplify the assembly and to minimize the volume of systems where fluid is transported from one component to another.

The above problem is solved by a clamping device for fluidically and mechanically connecting two hose barbs. The clamping device comprises a seal and a locking mechanism, wherein the locking mechanism can be transferred from a mounting condition to an assembled condition. In the mounting condition, the hose barbs can be inserted into the clamping device, whereas in the assembled condition, these hose barbs are locked in place in a position in which free ends of the hose barbs face each other and the seal coaxially aligns and fluid-tightly connects the free ends. The seal comprises a primary sealing lip for engaging an outer surface of the free ends of the hose barbs and a secondary sealing lip for engaging an inner surface of the free ends of the hose barbs. The primary and secondary sealing lips are connected by a web and form a flexure bearing.

The invention is based on the finding that components usually comprise hose barbs for establishing fluid connections to other components. The clamping device according to the invention makes it possible to directly connect two hose barbs, so that no hose is required. Thus, the invention not only minimizes the process volume but also the overall volume of the system. This also means that tubing material is saved. Furthermore, the assembly is simplified and more secure, since the clamping mechanism aligns the hose barbs and no tube needs to be connected with cable ties or clamps anymore.

To further increase the stability of the overall system, the locking mechanism can comprise a fixture for attaching the locking mechanism to a retaining plate.

According to a preferred embodiment of the invention, the seal and the locking mechanism are a prefabricated unit. Preferably, the seal is molded directly into the locking mechanisms. This means that the clamping device only comprises one part, which in turn further simplifies the assembly.

Preferably, the seal consists of a material resistant to irradiation and chemicals, like EPDM rubber, silicon, or a thermoplastic elastomer. These materials are suitable single-use materials which provide a sufficient chemical, temperature and irradiation stability when sterilized by heat, chemicals or radiation.

According to a preferred embodiment of the invention, the locking mechanism is preloaded into the assembled condition, such that a secure connection is ensured. Furthermore, having the locking mechanism preloaded into the assembled condition simplifies the assembly by automatically transferring the locking mechanism from the mounting condition into the assembled condition.

In order to connect two hose barbs having different dimensions, the seal and the locking mechanism can form an adapter. The adapter is especially useful for connecting hose barbs having different inner diameters since it is provided to align the hose barbs coaxially. Furthermore, having the seal and the locking mechanism form an adapter reduces the amount of parts needed to form a fluidic and mechanical connection, which helps with reducing the volume and costs.

For hose barbs having strongly differing inner diameters, the seal and the locking mechanism may comprise an intermediate section, which gradually adapts to the change in dimensions. In that case, the sealing function can be performed in two places, namely between the first hose barb and the intermediate area and between the second hose barb and the intermediate area. While this might slightly increase the system volume compared to a system, where two hose barbs with the same dimensions are connected, it ensures that the connection is possible at all and still compact and fluid-tight.

According to a first concept of the invention, the transfer of the locking mechanism from the mounting condition to the assembled condition is irreversible.

According to an alternative second concept of the invention, the locking mechanism can be reversibly transferred between the mounting condition and the assembled condition. A reversible locking mechanism allows a better waste management and makes more recycling options available since the parts can be disassembled more easily.

While the invention mainly relates to single-use systems, having a locking mechanism that can be reversibly transferred between the mounting and the assembled condition can still be an advantage, since that means that the locking mechanism can be used in multiple systems. In other words, once a process is finished, the locking mechanism can be transferred back into its mounting condition, allowing to disassemble the different components and then be used to assemble another set of components for a different process.

Not in accordance with the invention, the seal could be a sleeve with an inner wall adapted to frusto-conical shapes of the free ends of the hose barbs facing each other. This is a rather simple design, which leads to low production costs and, hence, reduces the overall costs involved.

According to the invention, the seal comprises a primary sealing lip for engaging an outer surface of the free ends of the hose barbs and a secondary sealing lip for engaging an inner surface of the free ends of the hose barbs. The primary and secondary sealing lips are connected by a web and form a flexure bearing. In other words, the primary sealing lip is intended to fully seal the hose barbs, while the secondary sealing lip, together with the primary sealing lip, is intended to align the hose barbs coaxially with one another. In order to protect the flexure bearing, it is possible to place rings between the frontal surface of the hose barbs and the flexure bearing.

Not in accordance with the invention, the seal could comprise an axial sealing piece and two guide pieces for increasing the free end surfaces of the hose barbs. The axial sealing piece is placed centrally between the two guide pieces and is preferably an O-ring. While the guide pieces are made of hard plastic, the axial sealing piece can be compressed in the assembled condition by the hose barbs.

In order for any of the seals to be functional, they need to be used in combination with a locking mechanism. One such locking mechanism according to the invention comprises a ring element encompassing the seal. Further, the ring element has latching hooks on opposite sides and two external threads. The locking mechanism also comprises two nuts having inner wall sections adapted to frusto-conical shapes of the free ends of the hose barbs and internal threads, so that the nuts can be screwed onto the ring element. Thereby, the latching hooks are forced to engage behind the rear gripping edge surfaces of the hose barbs such that the free ends of the hose barbs are pressed against each other. By using threads, it is ensured that the clamping device can be disassembled as easily as it can be assembled.

According to another embodiment of the invention, the locking mechanism comprises a first sleeve element and a second sleeve element inserted, preferably screwed, into the first sleeve element. Those sleeve elements surround the free ends of the hose barbs facing each other and are held in place in the assembled condition via a squeeze mechanism. The squeeze mechanism preferably includes radially movable slide elements, which engage behind rear gripping edge surfaces of the hose barbs in the assembled condition and have a keyhole contour adapted to the outer diameter of the hose barbs behind the gripping edges. This locking mechanism allows for an easy assembly since only the sliding elements need to be pushed into the correct position to fully secure the hose barb connection.

According to another embodiment of the invention, the locking mechanism comprises two axially spring-loaded snap rings for engaging behind rear gripping edge surfaces of the hose barbs. The snap rings are held in place by a sleeve. This particular locking mechanism allows for a very simplified assembly, since the hose barbs only have to be inserted into the sleeve. The actual transition into the assembled state is provided by the spring-loaded snap rings, which are preloaded into the assembled condition. Preferably, the axially preload force for the snap rings is given by elastomer springs or wave springs. Alternatively, the locking mechanism can also comprise a flexible O-ring between these spring-loaded snap rings and the sleeve.

According to an embodiment of the invention, the locking mechanism comprises a double-sided flexure bearing forming a clamp, which automatically opens when the hose barbs are inserted and engages behind rear gripping edge surfaces of the hose barbs once the hose barbs are fully inserted. Again, this locking mechanism consists of only one part, which simplifies the assembly. Furthermore, this locking mechanism is especially suitable to be part of a free pre-fabricated unit together with a seal.

It is to be noted that each seal can be used in combination with any one of the locking mechanisms. Further, any of the seals is only functional in combination with one of the locking mechanisms while any of the locking mechanisms requires a seal to be functional.

Further features and advantages of the invention will become apparent from the following description and from the accompanying drawings to which reference is made. In the schematic drawings:
- Figure 1 shows a schematic illustration of a hose barb;
- Figure 2 shows a schematic cross-section of two opposing hose barbs with an embodiment of a seal not in accordance with the invention;
- Figure 3 shows a schematic cross-section of two opposing hose barbs with an embodiment of a seal in accordance with the invention;
- Figure 4 shows another schematic cross-section of two opposing hose barbs with another alternative embodiment of a seal not in accordance with the invention;
- Figure 5 shows a schematic cross-section of a clamping device having a locking mechanism according to a first embodiment, wherein Figure 5A shows the mounting condition of the locking mechanism while Figure 5B shows the assembled condition of the locking mechanism;
- Figure 6 shows a schematic cross-section of a clamping device having an alternative locking mechanism according to a second embodiment, wherein Figure 6A shows the mounting condition of the locking mechanism and Figure 6B shows the assembled condition of the locking mechanism;
- Figure 7 shows a schematic cross-section of a clamping device having another locking mechanism according to a third embodiment, wherein Figure 7A shows the mounting condition of the locking mechanism and Figure 7B shows the assembled condition of the locking mechanism; and
- Figure 8 shows a schematic cross-section of a clamping device with yet another locking mechanism according to a fourth embodiment, wherein Figure 8A shows the mounting condition of the locking mechanism and Figure 8B shows the assembled condition of the locking mechanism.

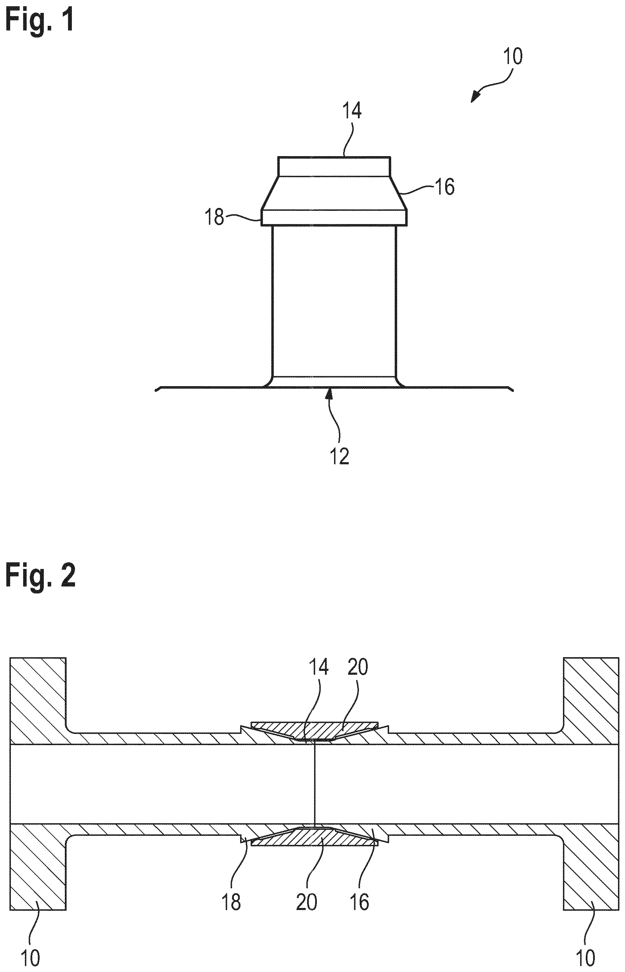

Figure 1 shows a schematic drawing of a typical hose barb 10 comprising a mounting end 12 mounted to a component and an opposite free end 14. The free 14 end transitions into a frusto-conical shape 16, which forms a protruding gripping edge 18.

The hose barb 10 is generally mounted to a component and generally used for fluid connection with another component. In particular, it will be described how two hose barbs 10 facing each other can be connected via a clamping device 8.

Figure 2 shows an example of a seal 20 not in accordance with the invention, which can be used as part of the clamping device 8. In this case, the seal 20 is simply a sleeve 22 whose inner wall 24 is adapted to the frusto-conical shapes 16 of the opposing free ends 14 of the hose barbs 10 in order to align the free ends 14 of the hose barbs 10 coaxially with each other.

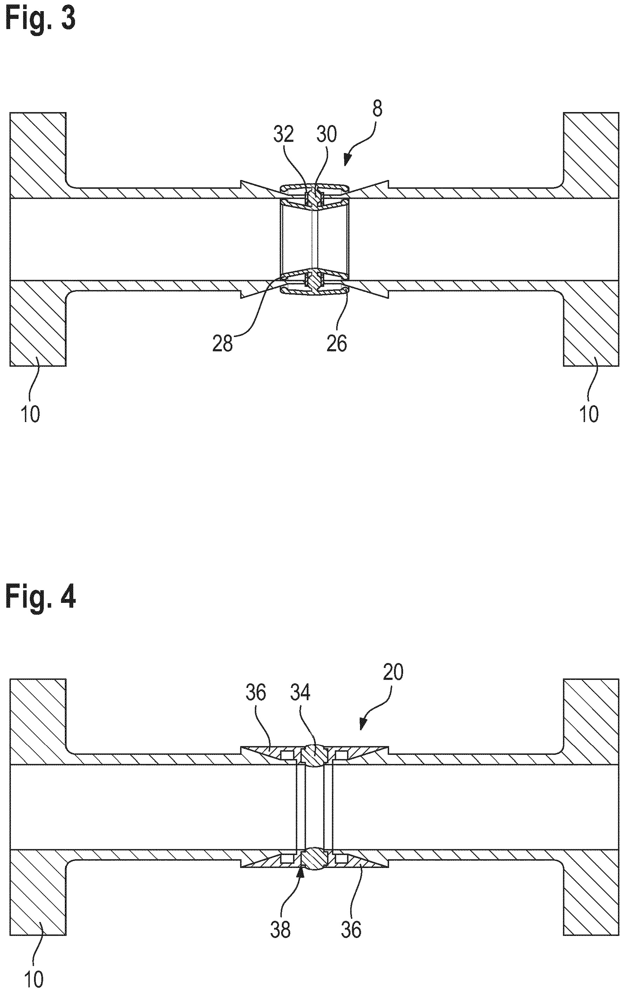

Alternatively, a seal 20 in accordance with the invention comprising a primary sealing lip 26 and a secondary sealing lip 26, as shown in Figure 3, can be used. The circumferential primary and secondary sealing lips 26, 28 are connected by a web 30. The web 30 and the sealing lips 26, 28 together form a flexure bearing.

The primary sealing lip 26 fully seals the hose barbs 10 from the outside. The secondary sealing lip 28 on the other hand, is intended to align the hose barbs 10 coaxially with each other, together with the primary sealing lip 26.

Since the free ends 14 of the hose barbs 10 are pressing against the web 30 in an assembled condition, it is possible to place rings 32 between the free ends 14 and the web 30. That way the risk of damage caused by the hose barbs 10 pressing against the web 30 is reduced.

A further embodiment of a seal 20 not in accordance with the invention is shown in Figure 4. Here, the seal 20 comprises an axial sealing piece in the form of an O-ring 34 and two guide pieces 36. The inside of the guide pieces 36 is adapted to the free ends 14 of the hose barbs 10, including the frusto-conical shape 16. Consequently, the guide pieces 36 increase the frontal area of the hose barbs 10.

The ends of the guide pieces 36 facing away from the respective hose barbs 10 allow the O-ring to be centrally located in a groove 38 formed by the two guide pieces 36. The guide pieces 36 can be made of a hard plastic, while the O-ring 34 consists of a compressible material.

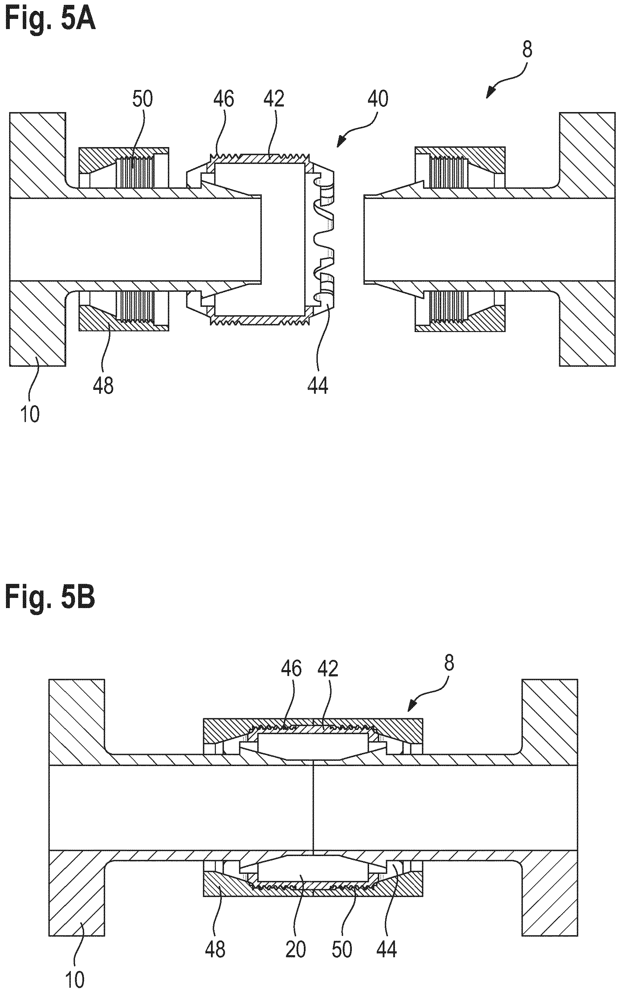

All of the three seals 20 described above are only functional in combination with one of the locking mechanisms 40 depicted in Figures 5 to 8. A clamping device 8 comprising one of the seals 20 and one of the locking mechanisms 40 is used for fluidically and mechanically connecting the two opposing hose barbs 10.

A first embodiment of the locking mechanism 40 shown in Figure 5 is used together with the seal 20 not in accordance with the invention shown in Figure 2. The locking mechanism 40 comprises a ring element 42, which encompasses the free ends 14 of the hose barbs 10. In particular, the ring element 42 has latching hooks 44 on each axial end of the ring element 42, which engage behind the gripping edge 18 of the hose barbs 10 in the assembled condition. The ring element 42 also has two external threads 46. These external threads 46 are used to screw two nuts 48 with internal threads 50 onto the ring element 42 in order to keep it in place.

Figure 5A shows the mounting condition of the locking mechanism 40. In a first step, the hose barbs 10 are inserted into the ring element 42. The frusto-conical shape 16 slightly pushes the latching hooks 44 apart while the free ends 14 of the hose barbs 10 are inserted before they snap back into place once they have passed the gripping edge 18.

In a second step, the nuts 48 are screwed onto the ring element 42, which forces the latching hooks 44 to engage with the gripping edges 18 of the hose barbs 10. Consequently, the free ends 14 of the hose barbs 10 are pressed against each other. Furthermore, the sleeve 22 is pressed against the free ends 14 of the hose barbs 10 from three directions ensuring a fluid-tight seal. This assembled condition is shown in Figure 5B.

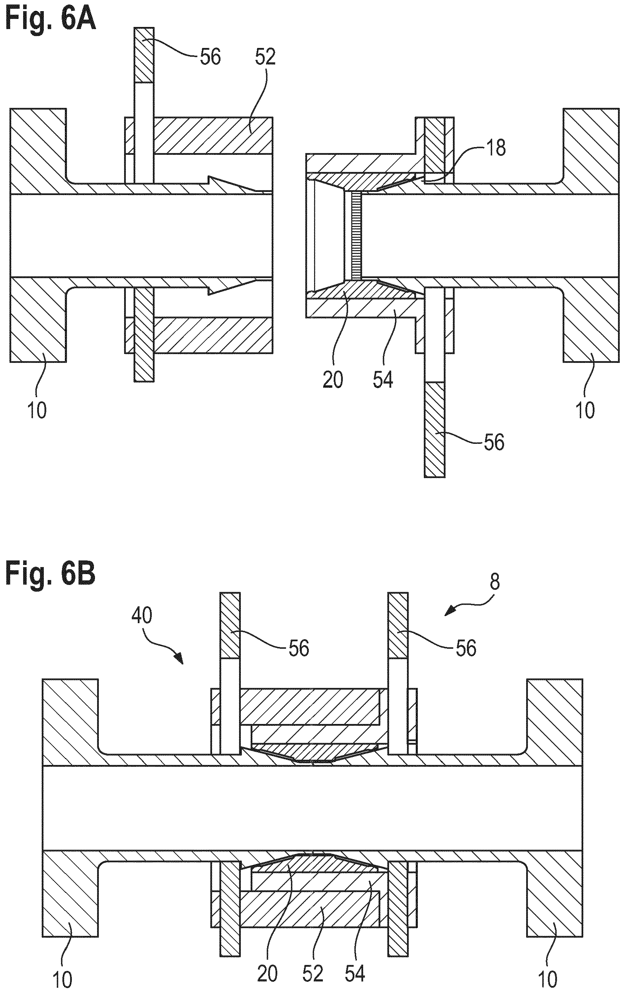

An alternative locking mechanism 40 is shown in Figures 6A and 6B, using the seal 20 not in accordance with the invention according to Figure 2 again. The locking mechanism 40 comprises a first sleeve element 52 and a second sleeve element 54 and two sliding elements 56 which can penetrate through the sleeve elements 52, 54, respectively.

The first and second sleeve elements 52, 54 surround the free ends 14 of the hose barbs 10 as well as the seal 20.

In order to ensure that the sleeve elements 52, 54 do not move with respect to each other, they can be screwed together via an internal thread of the first sleeve element 52 and an external thread of the second sleeve element 54. For the sake of simplicity, the threads are not shown in Figures 6A and 6B.

The sliding elements 56, which have a keyhole contour, are inserted into openings of the first and second sleeve elements 52, 54, respectively. In the mounting condition, the free ends 14 of the hose barbs 10 are each inserted into one of the sleeve elements 52, 54 and through the larger part of the keyhole contour of the respective slide element 56, such that the sliding elements 56 are located behind the gripping edges 18. The sleeve elements 52, 54 are screwed together, pressing the free ends 14 of the hose barbs 10 against each other. In order to fully lock the hose barbs 10 into place, the sliding elements 56 are radially moved such that the rims of the smaller parts of the keyhole contours forcibly engage behind the gripping edges 18 of the hose barbs 10.

In the assembled condition shown in Figure 6B, the hose barbs 10 cannot be removed from the clamping device 8 since the smaller parts of the keyhole contours of the sliding elements 56 have a smaller diameter than the gripping edges 18.

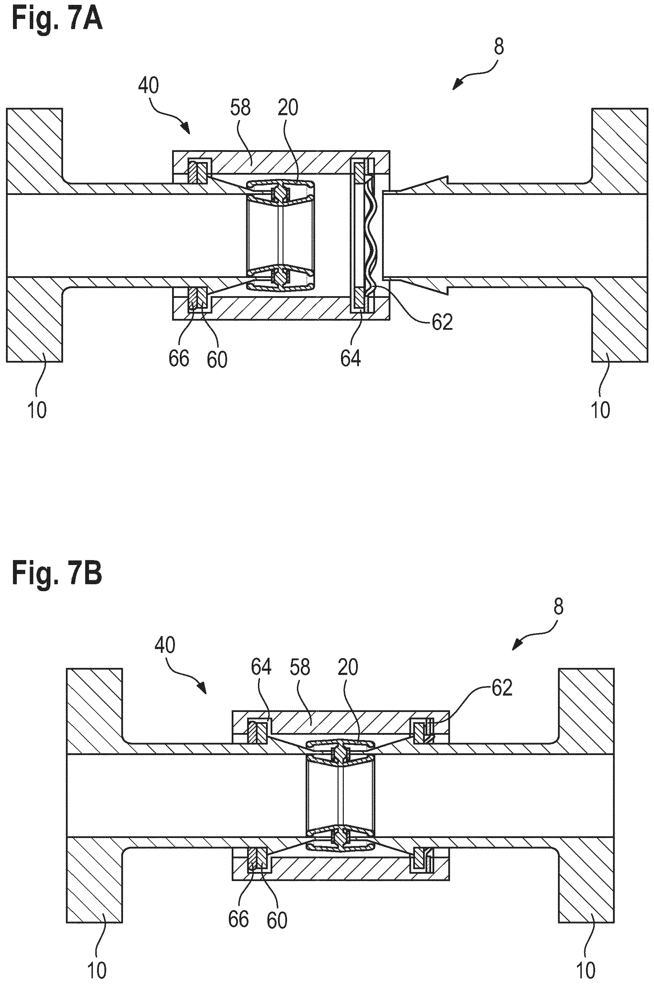

Yet another embodiment of the clamping device 8 is shown in Figures 7A and 7B. Here, the seal 20 in accordance with the invention comprising a primary sealing lip 26 and a secondary sealing lip 28, as shown in Figure 3, is used.

The locking mechanism 40 comprises a sleeve 58, two snap rings 60, and two springs 62 for axially spring-loading (biasing) the snap rings 60. The snap rings 60 engage with the gripping edges 18 of the hose barbs 10 and provide an increased surface for the sleeve 58 to hold the hose barbs 10 in place. Between each snap ring 60 and a sidewall of the groove 64, the spring 62, in particular an elastomer spring or a wave spring, is located.

As an alternative to one or both springs 62, one or two O-rings 66 can be used. For illustrative purposes, an O-ring 66 is located in the left groove 64 and the spring 62 is located in the right groove 64 of the sleeve 58 in Figures 7A and 7B.

In Figure 7A, the mounting condition is shown. The free end 14 of each hose barb 10 is pushed into the sleeve 58 and, thus, into the spring 62 and the snap ring 60. While the free end 14 of the hose barb 10 is pushed through the spring 62 and the snap ring 60, the frusto-conical shape 16 pushes the spring 62 and the snap ring 60 apart. For this purpose, the snap ring 60 has a slit, allowing it to expand when the free end 14 of the hose barb 10 is inserted.

Once the gripping edge 18 has been pushed through the snap ring 60 and the spring 62, they spring back into their original position and prevent the hose barb 10 from being pulled back.

While pushing the free ends 14 into the sleeve 58, the free ends 14 are also pushed between the primary and secondary sealing lips 26, 28 of the seal 20. The sleeve 58 further pushes the free ends 14 of the hose barbs 10 together and also ensures that the snap ring 60 and spring 62 engage with the gripping edges 18 of the hose barbs 10.

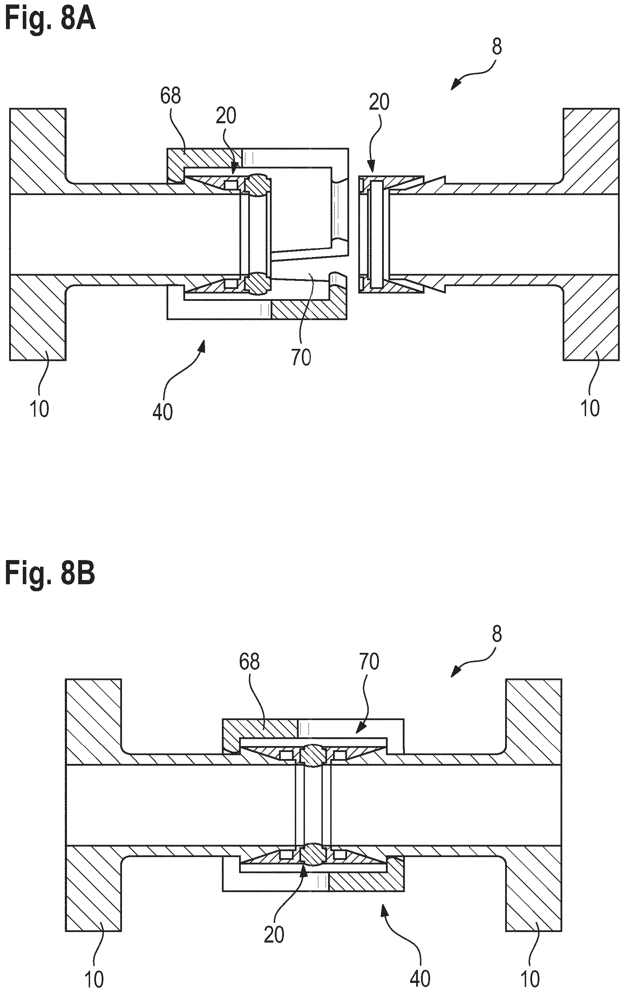

Figures 8A and 8B show yet another embodiment of the clamping device 8, using the seal not in accordance with the invention shown in Figure 4.

The locking mechanism 40 comprises a double-sided flexure bearing 68, which forms a clamp. In order to be flexible enough to widen in the mounting condition such that the free ends 14 of the hose barbs 10 can be inserted, the flexure bearing 68 comprises multiple cut-outs 70.

In Figure 8A, one of the hose barbs 10 has already been inserted into the flexure bearing 68 as well as into one of the guide pieces 36 of the seal 20, which is attached to the O-ring 34. In a next step, the second hose barb 10 is pushed into the flexure bearing 68 together with the other guide piece 36. Thanks to the cut-outs 70 of the flexure bearing 68, the flexure bearing 68 can slightly expand in order to let the guide piece 36 and the free end 14 of the hose barb 10 pass. Once the gripping edge 18 has been inserted into the flexure bearing 68, the flexure bearing 68 retreats back into its original form, which is shown in Figure 8B.

This clamping device 8 is especially suitable for the seal 20, or at least parts of the seal 20, and the locking mechanism 40 to be formed as one piece.

It is to be noted that while each of the different locking mechanisms 40 is shown with a particular seal 20, other combinations of locking mechanisms 40 and seals 20 are possible. In general, each locking mechanism 40 is only functional in combination with one of the seals 20, while each seal 20 is only functional in combination with one of the locking mechanisms 40 for the purpose of the present invention.

### List of Reference Signs

- 8: clamping device
- 10: hose barb
- 12: mounting end
- 14: free end
- 16: frusto-conical shape
- 18: gripping edge
- 20: seal
- 22: sleeve (seal)
- 24: inner wall
- 26: primary sealing lip
- 28: secondary sealing lip
- 30: web
- 32: rings
- 34: O-ring
- 36: guide pieces
- 38: groove
- 40: locking mechanism
- 42: ring element
- 44: latching hooks
- 46: external threads
- 48: nuts
- 50: internal threads
- 52: first sleeve element
- 54: second sleeve element
- 56: slide elements
- 58: sleeve (locking mechanism)
- 60: snap ring
- 62: spring
- 64: groove
- 66: O-ring
- 68: flexure bearing
- 70: cut-outs

## Claims

1. A clamping device (8) for fluidically and mechanically connecting two hose barbs (10), the clamping device comprising a seal (20) and a locking mechanism (40), wherein the locking mechanism (40) can be transferred from a mounting condition, in which the hose barbs (10) can be inserted into the clamping device (8), to an assembled condition, in which the hose barbs are locked in place in a position in which free ends (14) of the hose barbs (10) face each other and the seal (20) coaxially aligns and fluid-tightly connects the free ends (14)
**characterized in that** the seal (20) comprises a primary sealing lip (26) for engaging an outer surface of the free ends (14) of the hose barbs (10) and a secondary sealing lip (28) for engaging an inner surface of the free ends (14) of the hose barbs (10), the primary and secondary sealing lips (26, 28) being connected by a web (30) so as to form a flexure bearing.

2. The clamping device (8) according to claim 1, wherein the locking mechanism (40) comprises a fixture for attaching the locking mechanism (40) to a retaining plate.

3. The clamping device (8) according to any of the preceding claims, wherein the seal (20) and the locking mechanism (40) are a prefabricated unit, wherein the seal (20) is preferably moulded directly into the locking mechanism (40).

4. The clamping device (8) according to any of the preceding claims, wherein the seal (20) consists of a material resistant to irradiation and chemicals, preferably EPDM rubber or silicone or a thermoplastic elastomer or a fluoroelastomer polymer (FPM).

5. The clamping device (8) according to any of the preceding claims, wherein the locking mechanism (40) is pre-loaded into the assembled condition.

6. The clamping device (8) according to any of the preceding claims, wherein the seal (20) and the locking mechanism (40) form an adapter so as to connect two hose barbs (10) having different dimensions.

7. The clamping device (8) according to claim 6, wherein the seal (20) and the locking mechanism (40) comprise an intermediate section which gradually adapts to the change in dimensions.

8. The clamping device (8) according to any of the preceding claims, wherein transfer of the locking mechanism (40) from the mounting condition to the assembled condition is irreversible.

9. The clamping device (8) according to any of claims 1 to 7, wherein the locking mechanism (40) can be reversibly transferred between the mounting condition and the assembled condition.

10. The clamping device (8) according to any of the preceding claims, wherein the locking mechanism (40) comprises a ring element (42) encompassing the seal (20), the ring element (42) having latching hooks (44) on opposite sides and two external threads (46), the locking mechanism (40) further comprising two nuts (48) having inner wall sections adapted to frusto-conical shapes (16) of the free ends (14) of the hose barbs (10) and internal threads (50), so that the nuts (48) can be screwed onto the ring element (42), thereby forcing the latching hooks (44) to engage behind rear gripping edge (18) surfaces of the hose barbs (10) and pressing the free ends (14) of the hose barbs (10) against each other.

11. The clamping device (8) according to any of claims 1 to 9, wherein the locking mechanism (40) comprises a first sleeve element (52) and a second sleeve element (54) inserted, preferably screwed, into the first sleeve element (52), both sleeve elements (52, 54) surrounding the free ends (14) of the hose barbs (10) facing each other and being held in place in the assembled condition via a squeeze mechanism, the squeeze mechanism preferably including radially movable slide elements (56) engaging behind rear gripping edge (18) surfaces of the hose barbs (10) in the assembled condition and having a keyhole contour adapted to the outer diameter of the hose barbs (10) behind the gripping edges (18).

12. The clamping device (8) according to any of claims 1 to 9, wherein the locking mechanism (40) comprises two axially spring-loaded snap rings (60) for engaging behind rear gripping edge (18) surfaces of the hose barbs (10), the snap rings (60) being held in a sleeve (58).

13. The clamping mechanism (8) according to any of claims 1 to 9, wherein the locking mechanism (40) comprises a double-sided flexure bearing (68) forming a clamp which automatically opens when the hose barbs (10) are inserted and engages behind rear gripping edge (18) surfaces of the hose barbs (10) when the hose barbs (10) are fully inserted.

## Patentansprüche

1. Klemmvorrichtung (8) zum fluidischen und mechanischen Verbinden von zwei Schlauchtüllen (10), wobei die Klemmvorrichtung eine Dichtung (20) und einen Verriegelungsmechanismus (40) umfasst, wobei der Verriegelungsmechanismus (40) von einem Montagezustand, in dem die Schlauchtüllen (10) in die Klemmvorrichtung (8) eingesetzt werden können, in einen zusammengebauten Zustand überführt werden kann, in dem die Schlauchtüllen in einer Position verriegelt sind, in der freie Enden (14) der Schlauchtüllen (10) einander zugewandt sind und die Dichtung (20) die freien Enden (14) koaxial ausrichtet und fluiddicht verbindet,
**dadurch gekennzeichnet, dass** die Dichtung (20) eine primäre Dichtlippe (26) zum Eingreifen an einer Außenfläche der freien Enden (14) der Schlauchtüllen (10) und eine sekundäre Dichtlippe (28) zum Eingreifen an einer Innenfläche der freien Enden (14) der Schlauchtüllen (10) umfasst, wobei die primäre und die sekundäre Dichtlippe (26, 28) durch einen Steg (30) verbunden sind, um ein Biegelager zu bilden.

2. Klemmvorrichtung (8) nach Anspruch 1, wobei der Verriegelungsmechanismus (40) eine Befestigungsvorrichtung zum Befestigen des Verriegelungsmechanismus (40) an einer Halteplatte umfasst.

3. Klemmvorrichtung (8) nach einem der vorhergehenden Ansprüche, wobei die Dichtung (20) und der Verriegelungsmechanismus (40) eine vorgefertigte Einheit sind, wobei die Dichtung (20) vorzugsweise direkt in den Verriegelungsmechanismus (40) eingeformt ist.

4. Klemmvorrichtung (8) nach einem der vorhergehenden Ansprüche, wobei die Dichtung (20) aus einem strahlungs- und chemikalienbeständigen Material besteht, vorzugsweise aus EPDM-Kautschuk oder Silikon oder einem thermoplastischen Elastomer oder einem Fluorelastomer-Polymer (FPM).

5. Klemmvorrichtung (8) nach einem der vorhergehenden Ansprüche, wobei der Verriegelungsmechanismus (40) in den zusammengebauten Zustand vorgespannt ist.

6. Klemmvorrichtung (8) nach einem der vorhergehenden Ansprüche, wobei die Dichtung (20) und der Verriegelungsmechanismus (40) einen Adapter bilden, um zwei Schlauchtüllen (10) mit unterschiedlichen Abmessungen zu verbinden.

7. Klemmvorrichtung (8) nach Anspruch 6, wobei die Dichtung (20) und der Verriegelungsmechanismus (40) einen Zwischenabschnitt umfassen, der sich allmählich an die Änderung der Abmessungen anpasst.

8. Klemmvorrichtung (8) nach einem der vorhergehenden Ansprüche, wobei die Überführung des Verriegelungsmechanismus (40) von dem Montagezustand in den zusammengebauten Zustand irreversibel ist.

9. Klemmvorrichtung (8) nach einem der Ansprüche 1 bis 7, wobei der Verriegelungsmechanismus (40) reversibel zwischen dem Montagezustand und dem zusammengebauten Zustand überführt werden kann.

10. Klemmvorrichtung (8) nach einem der vorhergehenden Ansprüche, wobei der Verriegelungsmechanismus (40) ein Ringelement (42) umfasst, das die Dichtung (20) umgibt, wobei das Ringelement (42) Rasthaken (44) auf gegenüberliegenden Seiten und zwei Außengewinde (46) aufweist, wobei der Verriegelungsmechanismus (40) ferner zwei Muttern (48) umfasst, die Innenwandabschnitte aufweisen, die an kegelstumpfförmige Formen (16) der freien Enden (14) der Schlauchtüllen (10) angepasst sind, und Innengewinde (50), so dass die Muttern (48) auf das Ringelement (42) aufgeschraubt werden können, wodurch die Rasthaken (44) gezwungen werden, hinter hintere Greifkantenflächen (18) der Schlauchtüllen (10) einzugreifen, und die freien Enden (14) der Schlauchtüllen (10) gegeneinander gedrückt werden.

11. Klemmvorrichtung (8) nach einem der Ansprüche 1 bis 9, wobei der Verriegelungsmechanismus (40) ein erstes Hülsenelement (52) und ein zweites Hülsenelement (54) umfasst, das in das erste Hülsenelement (52) eingesetzt, vorzugsweise eingeschraubt, ist, wobei beide Hülsenelemente (52, 54) die freien Enden (14) der einander zugewandten Schlauchtüllen (10) umgeben und im zusammengebauten Zustand über einen Klemmmechanismus in Position gehalten werden, wobei der Klemmmechanismus vorzugsweise radial bewegliche Schiebeelemente (56) umfasst, die im zusammengebauten Zustand hinter hintere Greifkantenflächen (18) der Schlauchtüllen (10) eingreifen und eine Schlüssellochkontur aufweisen, die an den Außendurchmesser der Schlauchtüllen (10) hinter den Greifkanten (18) angepasst ist.

12. Klemmvorrichtung (8) nach einem der Ansprüche 1 bis 9, wobei der Verriegelungsmechanismus (40) zwei axial federbelastete Schnappringe (60) zum Eingreifen hinter hintere Greifkantenflächen (18) der Schlauchtüllen (10) umfasst, wobei die Schnappringe (60) in einer Hülse (58) gehalten werden.

13. Klemmvorrichtung (8) nach einem der Ansprüche 1 bis 9, wobei der Verriegelungsmechanismus (40) ein doppelseitiges Biegelager (68) umfasst, das eine Klemme bildet, die sich automatisch öffnet, wenn die Schlauchtüllen (10) eingesetzt werden, und hinter hintere Greifkantenflächen (18) der Schlauchtüllen (10) eingreift, wenn die Schlauchtüllen (10) vollständig eingesetzt sind.

## Revendications

1. Dispositif de serrage (8) pour relier fluidiquement et mécaniquement deux embouts de tuyau (10), le dispositif de serrage comprenant un joint d'étanchéité (20) et un mécanisme de verrouillage (40), dans lequel le mécanisme de verrouillage (40) peut être transféré d'un état de montage, dans lequel les embouts de tuyau (10) peuvent être insérés dans le dispositif de serrage (8), à un état assemblé, dans lequel les embouts de tuyau sont verrouillés en place dans une position dans laquelle les extrémités libres (14) des embouts de tuyau (10) sont en regard l'une de l'autre et le joint d'étanchéité (20) aligne coaxialement et relie de manière étanche aux fluides les extrémités libres (14)
**caractérisé en ce que** le joint d'étanchéité (20) comprend une lèvre d'étanchéité primaire (26) pour venir en prise avec une surface extérieure des extrémités libres (14) des embouts de tuyau (10) et une lèvre d'étanchéité secondaire (28) pour venir en prise avec une surface intérieure des extrémités libres (14) des embouts de tuyau (10), les lèvres d'étanchéité primaire et secondaire (26, 28) étant reliées par une membrane (30) de manière à former un palier de flexion.

2. Dispositif de serrage (8) selon la revendication 1, dans lequel le mécanisme de verrouillage (40) comprend un dispositif de fixation pour fixer le mécanisme de verrouillage (40) à une plaque de retenue.

3. Dispositif de serrage (8) selon l'une quelconque des revendications précédentes, dans lequel le joint d'étanchéité (20) et le mécanisme de verrouillage (40) sont une unité préfabriquée, dans lequel le joint d'étanchéité (20) est de préférence moulé directement dans le mécanisme de verrouillage (40).

4. Dispositif de serrage (8) selon l'une quelconque des revendications précédentes, dans lequel le joint d'étanchéité (20) est constitué d'un matériau résistant aux rayonnements et aux produits chimiques, de préférence du caoutchouc EPDM ou du silicone ou un élastomère thermoplastique ou un polymère fluoroélastomère (FPM).

5. Dispositif de serrage (8) selon l'une quelconque des revendications précédentes, dans lequel le mécanisme de verrouillage (40) est pré-chargé dans l'état assemblé.

6. Dispositif de serrage (8) selon l'une quelconque des revendications précédentes, dans lequel le joint d'étanchéité (20) et le mécanisme de verrouillage (40) forment un adaptateur de manière à relier deux embouts de tuyau (10) ayant des dimensions différentes.

7. Dispositif de serrage (8) selon la revendication 6, dans lequel le joint d'étanchéité (20) et le mécanisme de verrouillage (40) comprennent une section intermédiaire qui s'adapte graduellement au changement de dimensions.

8. Dispositif de serrage (8) selon l'une quelconque des revendications précédentes, dans lequel le transfert du mécanisme de verrouillage (40) de l'état de montage à l'état assemblé est irréversible.

9. Dispositif de serrage (8) selon l'une quelconque des revendications 1 à 7, dans lequel le mécanisme de verrouillage (40) peut être transféré de manière réversible entre l'état de montage et l'état assemblé.

10. Dispositif de serrage (8) selon l'une quelconque des revendications précédentes, dans lequel le mécanisme de verrouillage (40) comprend un élément annulaire (42) entourant le joint d'étanchéité (20), l'élément annulaire (42) ayant des crochets d'encliquetage (44) sur des côtés opposés et deux filetages extérieurs (46), le mécanisme de verrouillage (40) comprenant en outre deux écrous (48) ayant des sections de paroi intérieure adaptées à des formes tronconiques (16) des extrémités libres (14) des embouts de tuyau (10) et des filetages intérieurs (50), de sorte que les écrous (48) peuvent être vissés sur l'élément annulaire (42), forçant ainsi les crochets d'encliquetage (44) à venir en prise derrière des surfaces de bord de préhension arrière (18) des embouts de tuyau (10) et pressant les extrémités libres (14) des embouts de tuyau (10) l'une contre l'autre.

11. Dispositif de serrage (8) selon l'une quelconque des revendications 1 à 9, dans lequel le mécanisme de verrouillage (40) comprend un premier élément de manchon (52) et un second élément de manchon (54) inséré, de préférence vissé, dans le premier élément de manchon (52), les deux éléments de manchon (52, 54) entourant les extrémités libres (14) des embouts de tuyau (10) se faisant face et étant maintenus en place dans l'état assemblé par l'intermédiaire d'un mécanisme de serrage, le mécanisme de serrage comprenant de préférence des éléments coulissants radialement mobiles (56) venant en prise derrière des surfaces de bord de préhension arrière (18) des embouts de tuyau (10) dans l'état assemblé et ayant un contour en forme de trou de serrure adapté au diamètre extérieur des embouts de tuyau (10) derrière les bords de préhension (18).

12. Dispositif de serrage (8) selon l'une quelconque des revendications 1 à 9, dans lequel le mécanisme de verrouillage (40) comprend deux bagues élastiques à ressort axial (60) pour venir en prise derrière des surfaces de bord de préhension arrière (18) des embouts de tuyau (10), les bagues élastiques (60) étant maintenues dans un manchon (58).

13. Dispositif de serrage (8) selon l'une quelconque des revendications 1 à 9, dans lequel le mécanisme de verrouillage (40) comprend un palier de flexion double face (68) formant une pince qui s'ouvre automatiquement lorsque les embouts de tuyau (10) sont insérés et vient en prise derrière des surfaces de bord de préhension arrière (18) des embouts de tuyau (10) lorsque les embouts de tuyau (10) sont entièrement insérés.
